# EUROPÄISCHE PATENTSCHRIFT

(11) **EP 1 972 930 B1**
(45) Veröffentlichungstag und Bekanntmachung des Hinweises auf die Patenterteilung: **13.11.2019**
(21) Anmeldenummer: 07405087.3
(22) Anmeldetag: 19.03.2007
(51) Int. Cl.: G01N 21/88, G06K 9/20

(54) **Verfahren zur Erkennung von Oberflächenmerkmalen metallurgischer Erzeugnisse, insbesondere Strangguss- und Walzerzeugnisse, sowie eine Einrichtung zur Durchführung des Verfahrens**
Method for identifying surface characteristics of metallurgical products, in particular continuous casting and milling products, and device for implementing the method
Procédé de détection de caractéristiques de surface de produits métallurgiques, en particulier de produits de coulée continue et de laminage tout comme dispositif destiné à l'exécution du procédé

(43) Veröffentlichungstag der Anmeldung: 24.09.2008
(73) Patentinhaber: CONCAST AG, 8027 Zürich (CH)
(72) Erfinder: Rauber, Tobias, CH-9700 Küsnacht (CH); Masa, Péter, CH-2208 Les Hauts-Geneveys (CH)
(74) Vertreter: Luchs, Willi

(56) Entgegenhaltungen:
- EP-A- 0 880 023
- EP-A1- 1 524 047
- WO-A-00/37926
- WO-A-01/49043
- WO-A-97/00439
- US-A- 5 298 977

## Beschreibung

Die Erfindung betrifft ein Verfahren zur Erfassung und Wiedererkennung von Stranggusserzeugnissen.

Metallurgische Erzeugnisse, insbesondere Strangguss- und Walzerzeugnisse wie Vorblöcke, Brammen oder Knüppel, Platinen, Bleche, Bänder etc. werden im Produktionsfluss sowie zwischen weiteren Verarbeitungsstufen laufend verfolgt und registriert. Zu diesem Zwecke werden bestimmte Oberflächenmerkmale, wie zum Beispiel gezielt angebrachte Markierungen oder auch andere qualitätsrelevante Merkmale, wie beispielsweise Oberflächenfehler beobachtet und dem jeweiligen Erzeugnis zugeordnet.

Für die Markierung werden herkömmlich mitunter Markierungsmaschinen mit einem Markierungsstempel und einer Schlagvorrichtung verwendet, wie es beispielsweise aus der WO 03/074295 bekannt ist.

Aus der Druckschrift WO 00/37926 ist es bekannt, zur Objekterkennung bzw. zur Fehlerdetektion an Werkstücken, insbesondere an geschossenen Giesskernen oder Kernpaketen, das Objekt von mindestens zwei Lichtquellen aus unterschiedlichen Richtungen bzw. Winkeln zu beleuchten und das Objekt und die durch die Beleuchtung entstehenden Schatten durch eine einzige Kamera aufzunehmen. Zur Verarbeitung und Speicherung der gewonnenen Daten wird ein Computer mit einem hinreichenden Arbeitsspeicher verwendet.

Gemäss der Druckschrift EP-A-1 524 047 sind zur Beleuchtung der Identifikationsfläche eine Kamera sowie ein oder mehrere Beleuchtungskörper vorgesehen. Die Lichtstärke des künstlichen Lichtes ist so bemessen, dass die Lichteinwirkung des Tageslichtes ausgeschaltet wird. Es ist vorgesehen, dass es zur Erhöhung der Identifikationssicherheit möglich ist, digitalisierte Bilder der Schnittfläche nacheinander mit unterschiedlichem Lichteinfallswinkel in der Datenbank zu speichern. Bei mehreren Strahlungsquellen kann aber nicht unterschieden werden, ob die angestrahlten Flächen bzw. die gebildeten Schatten von der einen oder der andern Lichtquelle herrühren.

Die Druckschrift US 5,298,977 offenbart ein visuelles Inspektionsverfahren, bei dem Lichtstrahlen in drei unterschiedlichen Farben auf einer Oberfläche einer Printplatte zu einem einzigen Spotlicht zusammentreffen und auf eine oberste Fläche eines auf der Printplatte montierten elektronischen Teils strahlen. Daraus werden die Distanzen zwischen den Positionen dieser obersten Fläche und der Oberfläche der Printplatte gemessen. Die Höhe und der Einfallswinkel der obersten Fläche des elektronischen Teils werden entsprechend ausgewertet.

Der vorliegenden Erfindung liegt die Aufgabe zugrunde, ein Verfahren vorzuschlagen und eine Einrichtung zu schaffen, welche es ermöglichen, aufschlussreiche Informationen über Oberflächenmerkmale von metallurgischen Erzeugnissen, insbesondere Strangguss- und Walzerzeugnisse zuverlässig unter Produktionsbedingungen zu ermitteln und zu speichern.

Diese Aufgabe wird erfindungsgemäss durch ein Verfahren mit den Merkmalen des Anspruches 1 gelöst.

Das erfindungsgemässe Verfahren ermöglicht, in einer extrem kurzer Zeit enorm viele aufschlussreiche Informationen über metallurgische Erzeugnisse zu ermitteln und zu speichern, so dass diese für die Weiterverarbeitung einwandfrei identifiziert werden können.

Die Erfindung wird nachfolgend anhand der Zeichnung näher erläutert. Es zeigen rein schematisch:
- Fig. 1: den prinzipiellen Aufbau einer Stranggussanlage;
- Fig. 2: ein erstes Ausführungsbeispiel einer erfindungsgemässen Einrichtung zur Erfassung einer Erzeugnisoberfläche;
- Fig. 3: ein Beispiel einer Einrichtung des Stands der Technik zur Erfassung einer Erzeugnisoberfläche;
- Fig. 4: ein Blockschema einer erfindungsgemässen Einrichtung zur Identifikation von metallurgischen Erzeugnissen, insbesondere Stranggusserzeugnissen, und
- Fig. 5a bis 5c: je eine schematische Darstellung einer von jeweils einer Lichtquelle beleuchteten Markierung (Zahl 6).

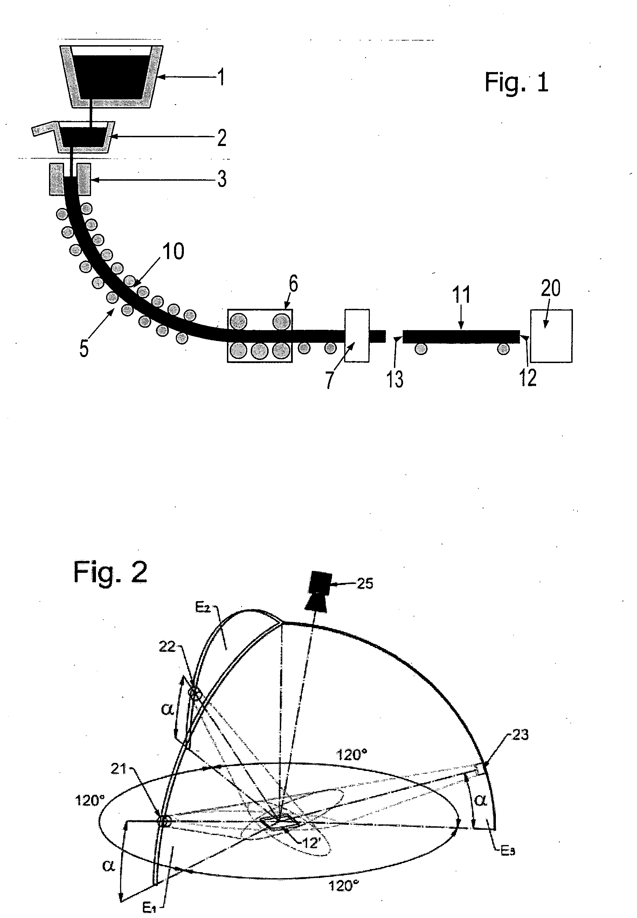

Fig.1 zeigt schematisch den prinzipiellen Aufbau einer an sich bekannten Stranggiessanlage mit einer Giesspfanne 1, einem Zwischengefäss 2 (Tundish), einer mit Wasser gekühlten Kokille 3, sowie einem Strangumlenkeinrichtung 5 für den Strang 10. Im gezeigten Beispiel einer so genannten Abbieganlage wird der heisse Strang 10 unter dem Ausziehaggregat 5 mittels Rollen in die Horizontale gebogen und von Walzen 6 gepresst. Danach wird der Strang 10 in einem Trennaggregat 7 (z.B. Brenner oder Schere) in Stücke 11 getrennt, bei denen es sich - je nach Giessquerschnitt der Kokille 3 - um Vorblöcke, Brammen oder Knüppel handelt, welche dann im Walzwerk zu Platinen, Blechen, Bändern etc weiterverarbeitet werden.

Zur Identifikation bzw. Erkennung der Stücke bzw. Halbprodukte 11, die beispielsweise in einer zur Zeichnungsebene der Fig. 1 senkrechten Richtung weggeführt werden, wird eine der beiden durch Trennung des Stranges 10 entstehenden Trennoberflächen 12, 13, gemäss Fig. 1 die Erzeugnisoberfläche 12, mittels einer Einrichtung 20 optisch für eine Wiedererkennung erfasst, wie nun im Folgenden anhand von Fig. 2 bis 4 beschrieben wird.

Bei der in Fig. 2 schematisch dargestellten Ausführung wird nach dem erfindungsgemässen Verfahren eine Erzeugnisoberfläche 12' (beispielsweise die vorstehend erwähnte Trennoberfläche 12 eines Vorblocks) von drei auf unterschiedlichen Standorten angeordneten Lichtquellen 21, 22, 23 beleuchtet. Alle drei Lichtquellen 21, 22, 23, deren Standorte in drei miteinander einen Winkel von 120° einschliessenden und zu der Erzeugnisoberfläche 12 senkrechten Ebenen E₁, E₂, E₃ liegen, sind unter dem gleichen Winkel α auf die Erzeugnisoberfläche 12 gerichtet. Es ist eine digitale Kamera 25 vorhanden, mit der die beleuchtete Erzeugnisoberfläche 12 in einem gewählten Ausschnitt mit entsprechenden Schatten und Reflektionen aufgenommen wird. Die dadurch gewonnenen Bilder bzw. Punktematrizen enthalten nebst den Informationen zur Erkennung des Produkts eine enorme Menge von Informationen über die Oberflächenbeschaffenheit bzw. Oberflächenstruktur, z.B. über Oberflächenfehler, Risse, Schlackeneinschlüsse, Kratzer etc.

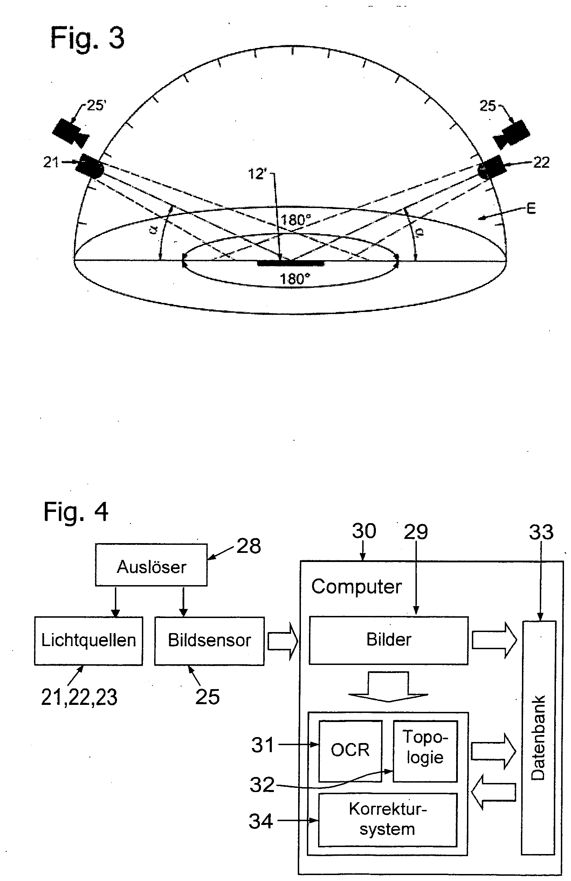

Wie im Blockschema nach Fig. 4 angedeutet, werden die nach der Auslösung 28 der Beleuchtung und der Kamera gewonnenen Bilder 29 in einem Computer 30 erfasst bzw. in einer Datenbank 33 gespeichert, von wo sie für die Wiedererkennung jederzeit abrufbar sind.

Als Lichtquellen 21, 22, 23 werden LED (Licht emittierende Dioden) verwendet, die im Vergleich beispielsweise mit Halogenlampen wesentlich höhere Lebensdauer und Effizienz aufweisen.

Bei der Verwendung von verschiedenfarbigen LED (und einer digitalen Farbkamera 25) werden vorteilhafte Resultate erzielt. Die verwendeten Lichtfarben sind Rot, Grün und Blau.

Beim einfachen Einsatz von verschiedenfarbigen LED ist OCR (optical character recognition) 31 als Erfassungs- und Wiedererkennungssystem geeignet.

Beim Einsatz von RGB (Rot/Grün/Blau)-LED ist sowohl OCR 31 als auch eine dreidimensionale Topologie (fingerprint) 32 als Erfassungs- und Wiedererkennungssystem geeignet
Für beide Erfassungs- und Wiedererkennungssysteme ist ein Fehlererkennung- und Korrektursystem 34 vorhanden.

Die Einrichtung 20 erlaubt scharfe Erfassung bewegter Teile, z.B. der Stranggusserzeugnisse. Der beste Kontrast wird bei einem Winkel α von 10°-20° erreicht.

Die Information über die dreidimensionale Topologie kann durch Stereotechnik, d.h. durch den Einsatz von zwei Kameras, verbessert werden. Zwei Kameras können auch zur Kontrastverbesserung beitragen.

Wie Fig. 3 zeigt als Stand der Technik zwei farbige LED 21, 22, beispielsweise mit den Lichtfarben rot und grün einzusetzen und die nicht vollkommene Information über die dreidimensionale Topologie in Kauf zu nehmen. Die Standorte der Leuchtdioden 21, 22 liegen bei dieser Variante in einer gemeinsamen, zu der Erzeugnisoberfläche 12' senkrechten Ebene E. Auch hier können statt einer einzigen Kamera zwei Kameras 25, 25' eingesetzt werden, wobei der primäre Grund dafür eine Kontrastverbesserung bei grösseren Winkeln α ist, und nicht das Erzeugen einer Stereoaufnahme.

Die erfindungsgemässe Einrichtung ermöglicht, in einer extrem kurzer Zeit enorm viele aufschlussreiche Informationen über metallurgische Erzeugnisse, insbesondere Stranggusserzeugnisse, zu ermitteln und zu speichern, so dass diese für die Weiterverarbeitung einwandfrei identifiziert werden können.

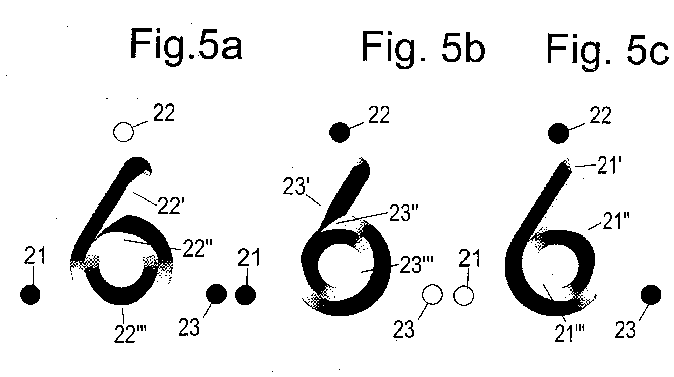

Fig. 5a bis 5c zeigen ferner ein Ausführungsbeispiel einer in die Erzeugnisoberfläche beispielhaft eingespempelten Zahl 6. Es sind wiederum drei Lichtquellen 21, 22, 23 in einem Winkel von 120° zu einem Zentrum gerichtet angeordnet. Diese drei Lichtquellen bewirken jeweils ein Farb-bzw. Schattenbild, wie es in diesen Figuren veranschaulicht ist. Im Querschnitt gesehen bildet diese Zahl 6 eine V-Form, so dass bei der oberseitigen hellen Lichtquelle 22 auf die angestrahlten Flächen dieser Zahl 6 eine entsprechend helle Beleuchtung an den Stellen 22', 22", 22'" entsteht. Bei Fig. 5b ist die Lichtquelle 23 eingeschaltet, welche eine entsprechende Beleuchtung bei den Stellen 23', 23", 23" und bei Fig. 5c bewirkt die Lichtquelle 21 entsprechende Beleuchtungen bei den Stellen 21', 21", 21'".

Theoretisch sind 3 Lichtquellen ausreichend. Die Einrichtung kann auch derart ausgestaltet sein, dass sie tragbar ist und daher mobil an einem gewünschten Ort kurzzeitig eingesetzt werden kann.

## Patentansprüche

1. Verfahren zur Erfassung und Wiedererkennung von Stranggusserzeugnissen, bei welchem bestimmte Oberflächenmerkmale beobachtet und dem jeweiligen Stranggusserzeugnis zugeordnet werden, **dadurch gekennzeichnet, dass**
eine nach der Trennung eines Stranges (10) in Stücke entstehenden Trennoberflächen (12, 13) des jeweiligen Stranggusserzeugnisses von drei Leuchtdioden (21, 22, 23) mit unterschiedlichen Lichtfarben Rot, Grün und Blau aus unterschiedlichen Standorten beleuchtet wird, wobei die Leuchtdioden (21, 22, 23) unter je einem gleichen Winkel (α) auf die Erzeugnisoberfläche (12, 12') gerichtet sind, wobei der Winkel (α) jeweils zwischen 10° und 20° beträgt, und die Standorte der Leuchtdioden (21, 22, 23) in drei miteinander einen Winkel von 120° einschliessenden und zu der Erzeugnisoberfläche (12, 12') senkrechten Ebenen (E1, E2, E3) liegen, und der durch die Leuchtdioden (21, 22, 23) beleuchtete Oberflächenabschnitt durch eine digitale Kamera (25) oder zwei digitale Kameras (25, 25') aufgenommen wird, wobei die von der Kamera oder den Kameras aufgenommenen Bilder bzw. Punktmatrizen zur Identifizierung des jeweiligen Stranggusserzeugnisses und zur Feststellung der Oberflächenbeschaffenheit bzw. Oberflächenstruktur, wie Oberflächenfehler, Risse, Schlackeneinschlüsse oder Kratzer, in einem Computer (30) erfasst und für die Wiedererkennung in einer Datenbank (33) gespeichert werden, wobei zur Erfassung und Wiedererkennung dreidimensionale Topologie (fingerprint) und/oder OCR (optical character recognition) eingesetzt wird.

## Claims

1. A method for identifying and recognition continuous casting products, in which certain surface characteristics are observed and assigned to the respective continuous casting product, **characterized in that**
separating surfaces (12, 13) of the respective continuous casting product, which separating surfaces (12, 13) arise after the separation of a strand (10) into pieces, is illuminated by three light sources (21, 22, 23) having different light colours of red, green and blue from different locations, whereas the light sources (21, 22, 23) are oriented towards the product surface (12, 12') at the same angle (α) respectively, whereas each of the angle (α) amounts between 10° and 20°, and the locations of the light sources (21, 22, 23) lie in three planes (E1, E2, E3) which enclose an angle of 120° with one another and are perpendicular to the product surface (12, 12'), and the surface portion illuminated by the light sources (21, 22, 23) is recorded by a digital camera (25) or two digital cameras (25, 25'), whereas the images or dot matrices recorded by the camera or the cameras are acquired in a computer (30) for identification of the respective continuous casting product and for the determination of the surface condition or surface structure, such as surface defects, cracks, slag inclusions or scratches, and stored in a database (33) for the recognition, whereas three-dimensional topology (fingerprint) and/or OCR (optical character recognition) is being used for the detection and recognition.

## Revendications

1. Procédé de détection et de reconnaissance de produits de coulée continue, dans lequel on observe des caractéristiques de surface déterminées et on les associe aux produits de coulée continue respectifs, **caractérisé en ce que**
on éclaire, à partir d'emplacements différents, une surface (12, 13) de séparation, se produisant après la séparation d'un cordon (10) en tronçons, du produit de coulée continue respectif, par trois diodes (21, 22, 23) électroluminescentes, de couleur de lumière différente, rouge, verte et bleue, les diodes (21, 22, 23) électroluminescentes étant dirigées chacune suivant un même angle (α) sur la surface (12, 12') du produit, l'angle (α) étant compris entre 10° et 20°, et les emplacements des diodes (21, 22, 23) électroluminescentes faisant à trois les unes avec les autres un angle de 120° et étant dans des plans (E1, E2, E3) perpendiculaires à la surface (12, 12') du produit, et on enregistre la partie de surface éclairée par les diodes (21, 22, 23) électroluminescentes par une caméra (25) numérique ou par deux caméras (25, 25') numériques, dans lequel on détecte, dans un ordinateur (30), les images ou les matrices de point enregistrées par la caméra ou par les caméras, pour identifier le produit de coulée continue respectif et pour constater la nature de la surface ou une structure de la surface, comme des défauts de surface, des criques, des inclusions de scories, des raclettes, et on les mémorise pour la reconnaissance dans une base (33) de données, dans lequel on utilise, pour la détection et la reconnaissance, une topologie en trois dimensions (finger-print) et/ou l'OCR (optical character recognition).
